(19)

Europäisches Patentamt

European Patent Office

Office européen des brevets

(11) **EP 3 306 929 A1**

(12) **EUROPEAN PATENT APPLICATION**

(43) Date of publication:
**11.04.2018 Bulletin 2018/15**

(51) Int Cl.:
**H04N 19/176** $^{(2014.01)}$ **H04N 19/119** $^{(2014.01)}$
**H04N 19/147** $^{(2014.01)}$ **H04N 19/567** $^{(2014.01)}$
**H04N 19/557** $^{(2014.01)}$

(21) Application number: **16306324.1**

(22) Date of filing: **07.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• URBAN, Fabrice
  **35576 Cesson-Sévigné Cedex (FR)**

• POIRIER, Tangi
  **35576 Cesson-Sévigné Cedex (FR)**
• LELEANNEC, Fabrice
  **35576 Cesson-Sévigné Cedex (FR)**

(74) Representative: **Huchet, Anne**
**TECHNICOLOR**
**1-5, rue Jeanne d'Arc**
**92130 Issy-les-Moulineaux (FR)**

Remarks:
A request for correction of the description has been filed pursuant to Rule 139 EPC. A decision on the request will be taken during the proceedings before the Examining Division (Guidelines for Examination in the EPO, A-V, 3.).

(54) **METHOD AND APPARATUS FOR ENCODING A VIDEO**

(57) A method and an apparatus for encoding a video are disclosed. For at least one block from a picture of said video, at least one first rate-distortion cost for coding said block according to a first splitting mode of said block is determined (402, 408). It is then determined (404) if coding said block according to said first splitting mode of said block satisfies a criterion. If so, a second rate-distortion cost for coding said block according to at least one asymmetric splitting mode is determined (408), wherein said asymmetric splitting mode corresponds to splitting said block horizontally, or vertically, into two asymmetric subblocks. A best splitting mode for said block is determined (411) according to at least said first rate-distortion cost and said second rate-distortion cost, and the block is encoded (412) according to said best splitting mode.

FIG. 5

EP 3 306 929 A1

**Description**

1. Technical field

A method and an apparatus for encoding a video into a bitstream are disclosed.

2. Background

For coding a picture of a video sequence, video compression methods usually divide the picture into a set of blocks of pixels.

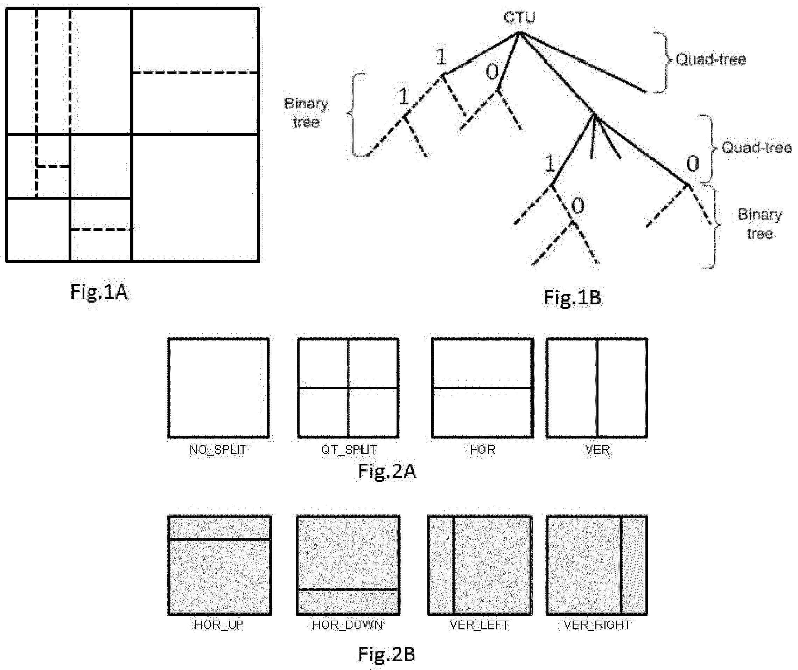

In an HEVC video compression standard (*"ITU-T H.265 Telecommunication standardization sector of ITU (10/2014), series H: audiovisual and multimedia systems, infrastructure of audiovisual services - coding of moving video, High efficiency video coding, Recommendation ITU-T H.265'),* a picture is divided into Coding Tree Units (CTU), which size may be 64x64, 128x128 or 256x256 pixels. Each CTU may be further subdivided using a quad-tree division, where each leaf of the quad-tree is called a Coding Unit (CU). Each CU is then given some Intra or Inter prediction parameters. To do so, a CU is spatially partitioned into one or more Prediction Units (PU), a PU may have a square or a rectangular shape. A Quad-Tree plus Binary-Tree (QTBT) coding tool (*"Algorithm Description of Joint Exploration Test Model 3",* Document JVET-C1001_v3, Joint Video Exploration Team of ISO/IEG JTC1/SC29/WG11, 3rd meeting, 26th May-1st June 2015, Geneva, CH), provides a CTU representation for representing picture data in a more flexible way than the units arrangement of the HEVC standard. The Quad-Tree plus Binary-Tree (QTBT) coding tool consists in a coding tree where coding units can be split both in a quad-tree and in a binary-tree fashion. Such coding tree representation of a Coding Tree Unit is illustrated on figures 1A and 1B, where solid lines indicate quad-tree partitioning and dotted lines indicate binary partitioning of aCU.

The splitting of a coding unit is decided on the encoder side through a rate distortion optimization procedure, which consists in determining the QTBT representation of the CTU with minimal rate distortion cost. In the QTBT representation, a CU has either a square or a rectangular shape. The size of coding unit is always a power of 2, and typically goes from 4 to 128. The QTBT decomposition of a CTU is made of two stages: first the CTU is split in a quad-tree fashion, then each quad-tree leaf can be further divided in a binary fashion or in a quad-tree fashion, as illustrated on figure 1B, where solid lines represent the quad-tree decomposition phase and dotted lines represent the binary decomposition that is spatially embedded in the quad-tree leaves. With the QTBT representation, no more CU partitioning into PU or TU is employed.

The number of CTU splitting modes to evaluate on the encoder side is high and therefore impacts computational complexity at the encoder side.

3. Summary

According to an aspect of the present principle, a method for encoding a video is disclosed. Such a method comprises, for at least one block from a picture of said video:

- determining at least one first rate-distortion cost for coding said block according to a first splitting mode of said block,
- determining if coding said block according to said first splitting mode of said block satisfies a criterion,
- if said criterion is satisfied, determining (408) a second rate-distortion cost for coding said block according to at least one asymmetric splitting mode, wherein said asymmetric splitting mode corresponds to splitting said block horizontally, or vertically, into two asymmetric subblocks,
- determining a best splitting mode for said block according to at least said first rate-distortion cost and said second rate-distortion cost,
- encoding said block according to said best splitting mode.

The present principle allows reducing computational complexity at the encoder when asymmetric splitting modes are added to the already available splitting modes for encoding a block. According to the present principle, asymmetric splitting modes are only evaluated if a splitting mode previously evaluated satisfies a predetermined criterion. Here, asymmetric subblocks should be understood as two subblocks for which their sizes along a horizontal orientation or along a vertical orientation are not equal. In other words, an asymmetric splitting of a block along an orientation corresponds to splitting said block along said orientation at a non-zero distance from a middle line of said block in said orientation.

According to an embodiment of the present disclosure, said first splitting mode belongs to a group comprising at least:

- a no-splitting mode wherein said block is not split,
- a horizontal splitting mode wherein said block is split horizontally into two symmetric subblocks,
- a vertical splitting mode wherein said block is split vertically into two symmetric subblocks.

According to another embodiment of the present disclosure, said first splitting mode is a mode wherein said block is not split, said method further comprises:

- determining a third coding cost for coding said block according to a symmetric splitting mode of said block, wherein said symmetric splitting mode corresponds to splitting said block horizontally, or vertically, into two symmetric sub-blocks,
- said criterion being satisfied if said third coding cost over said first coding cost is lower than a predetermined threshold, said asymmetric splitting mode being a splitting mode according to a same orientation as said symmetric splitting mode.

According to this embodiment, horizontal, respectively vertical, asymmetric splitting mode are evaluated only if horizontal, respectively vertical, symmetric splitting mode performs better than a mode wherein the block is not split. Thus, this embodiment takes into account the compression efficiency evaluated for symmetric splitting mode in a same direction.

According to another embodiment of the present disclosure, said first splitting mode is a horizontal symmetric splitting mode wherein said block is split horizontally into two symmetric subblocks, said method further comprises:

- determining a third coding cost for coding said block according to a vertical symmetric splitting mode, wherein said vertical symmetric splitting mode corresponds to splitting said block vertically into two symmetric subblocks,
- wherein said criterion is satisfied if said first coding cost over said third coding cost is higher than a first threshold,
- and wherein if said criterion is satisfied, said asymmetric splitting mode is a vertical asymmetric splitting mode,
- otherwise, if said third coding cost over said first coding cost is higher than a second threshold, said asymmetric splitting mode is a horizontal asymmetric splitting mode.

According to this embodiment, it is determined to evaluate the horizontal, respectively vertical, asymmetric splitting mode if the corresponding horizontal, respectively vertical, symmetric splitting mode performs better than the vertical, respectively horizontal, symmetric splitting mode.

According to another embodiment of the present disclosure, said first splitting mode is a mode wherein said block is not split, said criterion being satisfied if quantized transform coefficients obtained from said block when coding said block according to said first splitting mode are not all zero. According to this embodiment, the horizontal, respectively vertical, asymmetric splitting mode is not evaluated if the no split mode performs sufficiently well, i.e by providing a zero-residue block.

According to another embodiment of the present disclosure, said first splitting mode is a horizontal, or respectively vertical, splitting mode, and a subblock is obtained by splitting said block according to said first splitting mode, said subblock being co-located with a splitting line of said block when said block is split according to said asymmetric splitting mode, said asymmetric splitting mode and said first splitting mode being along a same orientation, said criterion being satisfied if a binary tree depth associated with said subblock is higher than a binary tree depth associated with said block plus 1.

According to this embodiment, the topology obtained from previously evaluated splitting modes of the block is taken into account to determine whether an asymmetric splitting mode should be evaluated. The topology is the subdivision of a block (e.g. a CTU) into sub-blocks (e.g. into CUs and sub-CUs) by successive splits. According to this embodiment, the predetermined criterion is satisfied if an evaluation of the predetermined splitting mode leads to a partitioning of the current block wherein a first sub-block obtained from splitting said block according to said predetermined splitting mode is further split, and wherein said first sub-block corresponds spatially with the splitting line of the asymmetric splitting mode of the current block.

According to another embodiment of the present disclosure, when said criterion is satisfied, said block being asymmetrically split horizontally or vertically into a first sub-block and a second sub-block, said first sub-block being larger than said second sub-block, said method further comprises:

- comparing a rate-distortion cost computed for said first sub-block with a rate-distortion cost computed for a spatially corresponding sub-block obtained from a splitting mode of said block previously evaluated,
- if said rate-distortion cost computed for said first sub-block is lower or equal than said rate-distortion cost computed for said spatially corresponding sub-block, determining a rate-distortion cost for said second sub-block.

According to this embodiment, computational complexity is further reduced as when computing a best coding mode for the sub-blocks obtained from an asymmetric splitting mode of the block, the rate-distortion optimization is performed for the second sub-block only if the first sub-block performs sufficiently well compared to previously evaluated splitting mode for the same area.

According to another embodiment of the present disclosure, when said criterion is satisfied, said block being asymmetrically split horizontally or vertically into a first sub-block and a second sub-block, said first sub-block or said second sub-block having a size equal to $3 \times 2^n$, n being an integer with n≥0, said method further comprises determining a best coding mode for coding at least said first sub-block, wherein at least one encoding tool to be applied to said first sub-block is disabled or adapted.

According to another embodiment of the present disclosure, said at least one encoding tool belongs to a list comprising:

- a reference sample adaptive filtering used for filtering causal spatial neighbor samples used for performing intra prediction of said first sub-block,
- a position dependent predictor combination used for adapting intra prediction according to a position of a predicted sample from said first sub-block.

According to another aspect of the present principle, an apparatus for encoding a video is disclosed. Such an apparatus comprises, for at least one block from a picture of said video:

- means for determining at least one first coding cost for coding said block according to at least one predetermined splitting mode of said block,
- means for determining if coding said block according to said predetermined splitting mode of said block satisfies a predetermined criterion,
- means for, if said predetermined criterion is satisfied, determining a second coding cost for coding said block according to a horizontal or vertical asymmetric splitting mode, wherein said horizontal, respectively vertical asymmetric splitting mode corresponds to splitting said block horizontally, respectively vertically, at a non-zero distance from a horizontal middle line, respectively a vertical middle line, of said block,
- means for determining a best splitting mode for said block according to at least said first coding cost and said second coding cost,
- means for encoding said block according to said best splitting mode.

The present disclosure also provides a computer readable storage medium having stored thereon instructions for encoding a video according to any one of the embodiments described in the disclosure.

According to one implementation, the different steps of the method for encoding a video as described here above are implemented by one or more software programs or software program modules comprising software instructions intended for execution by a data processor of an apparatus for encoding a video, these software instructions being designed to command the execution of the different steps of the method according to the present principles.

A computer program is also disclosed that is capable of being executed by a computer or by a data processor, this program comprising instructions to command the execution of the steps of a method for encoding a video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc) and is capable of accessing hardware resources of this physical entity (memories, recording media, communications buses, input/output electronic boards, user interfaces, etc).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

4. Brief description of the drawings

Figure 1A illustrates an exemplary CTU partitioning according to the quad-tree and binary tree based method (QTBT),
Figure 1B illustrates an exemplary tree representation of a CTU partitioning according to the quad-tree and binary tree based method (QTBT),
Figure 2A depicted symmetric splitting modes;
Figure 2B depicted asymmetric splitting modes according to the present principles;
Figure 3 illustrates a block diagram of an exemplary encoder for encoding a video according to an embodiment of the present principle,
Figure 4 illustrates a flow diagram of an exemplary method for selecting a best splitting mode for a CU according to an embodiment of the present principle,
Figure 5 illustrates a flow diagram of an exemplary method for selecting a best splitting mode for a CU according to another embodiment of the present principle,
Figure 6A illustrates CU splitting modes taken into account for deciding whether to evaluate horizontal down splitting mode according to another embodiment of the present principle,
Figure 6B illustrates CU splitting modes taken into account for deciding whether to evaluate vertical right splitting mode according to another embodiment of the present principle,
Figure 7 illustrates another embodiment of the present principle taking into account a topology of already evaluated CU splitting modes for deciding whether to evaluate an asymmetric splitting mode,
Figure 8 illustrates an exemplary encoder that may be used in any one of the embodiments of the present principle.

5. Description of embodiments

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another. Various methods are described above, and each of the methods comprises one or more steps or actions for achieving the described method. Unless a specific order of steps or actions is required for proper operation of the method, the order and/or use of specific steps and/or actions may be modified or combined. A picture is an array of luma samples in monochrome format or an array of luma samples and two corresponding arrays of chroma samples in 4:2:0, 4:2:2, and 4:4:4 colour format. Generally, a "block" addresses a specific area in a sample array (e.g., luma Y), and a "unit" includes the collocated block of all encoded color components (luma Y and possibly chroma Cb and chroma Cr). However, the term "block" is used herein to refer to a block (e.g. a CB) or a unit (e.g. a CU).

In the following sections, the word "reconstructed" and "decoded" can be used interchangeably. Usually but not necessarily "reconstructed" is used on the encoder side while "decoded" is used on the decoder side.

According to the present principles, asymmetric splitting modes are added to the QTBT symmetric splitting modes. The QTBT symmetric splitting modes are depicted on figure 2A and the asymmetric splitting modes are depicted on figure 2B.

As an example, the mode HOR_UP indicates to split the block of height h and width w horizontally into one sub-block of height h/4 above one sub-block of height 3h/4. The mode HOR_DOWN indicates to split the block horizontally into one sub-block of height h/4 below one sub-block of height 3h/4. The mode VER_LEFT indicates to split the block vertically into one sub-block of width w/4 on the left of one sub-block of width 3w/4. The mode VER_RIGHT indicates to split the block vertically into one sub-block of width w/4 on the right of one sub-block of width 3w/4. By splitting a CU according to the asymmetric splitting modes, new rectangular CU shapes may be added. These new shapes consist in sizes equal to $3 \cdot 2^n$ in width and/or height. Furthermore, a CU with a size multiple of 3 in width or height can be further split in a binary fashion, horizontally or vertically.

However, the number of CU splitting modes to evaluate on the encoder side increases dramatically as such asymmetric splitting is possible at each level of the coding tree unit partitioning, therefore impacting computational complexity at the encoder side.

Therefore, there is a need for a new method and apparatus for encoding a video.

The principle disclosed herein is described for encoding a picture from a video sequence, however the disclosed principle may be applied to still digital pictures as well.

To encode a video sequence with one or more pictures, a picture may be partitioned into coding tree units (CTU) of square shape with a configurable size. A consecutive set of coding tree units may be grouped into a slice. A CTU is the root of a QTBT partitioning into Coding Units (CU).

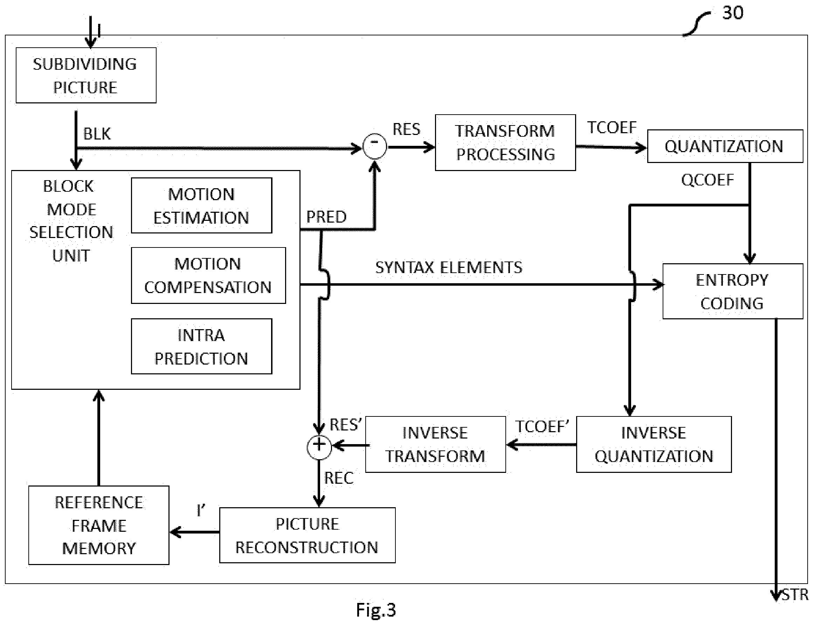

Figure 3 illustrates a block diagram of an exemplary encoder for encoding a video according to an embodiment of the present principle. The video encoder 30 disclosed here below may be conforming to any video or still picture encoding schemes. In the exemplary encoder 30, a picture is encoded by the encoder modules as described below.

Classically, the video encoder 30 may include several modules for block-based video encoding, as illustrated in figure 3. A picture I to be encoded is input to the encoder 30. The picture I is first subdivided into a set blocks by a subdividing module. Each blocks (BLK) of the picture I is then processed for encoding. In the following, a block may correspond to a coding unit from a QTBT partitioning.

The encoding and decoding processes described below are for illustration purposes. According to some embodiments, encoding or decoding modules may be added, or removed or may vary from the following modules. However, the principle disclosed herein could still be applied to these variants.

The encoder 30 performs encoding of each block of the picture I as follows. The encoder 30 comprises a mode selection unit for selecting a coding mode for a block of the picture to be coded, e.g. based on a rate/distortion optimization. Each block is encoded using either an intra or inter mode. The mode selection unit comprises:

- a motion estimation module for estimating motion between one current block of the picture to be coded and reference pictures,
- a motion compensation module for predicting the current block using the estimated motion,
- an intra prediction module for spatially predicting the current block.

The mode selection unit may also decide whether splitting of the block is needed according to rate/distortion optimization. In that case, the mode selection unit then operates for each subblock of the block BLK.

The block mode selection unit performs the encoding of the block for each candidate coding mode for the block BLK and computes a rate-distortion cost for each of these coding modes. The coding mode providing the lowest rate-distortion cost is selected as the best coding mode for the current block BLK. A candidate coding mode may be any coding mode available for coding the block and depends on the video compression standards used. For instance, for an HEVC coder, candidate coding modes may be chosen among a plurality of coding modes such as for example one of the 36 intra prediction modes, an inter prediction mode using an estimated motion vector, a merge coding mode deriving motion information from spatial and/or temporal neighbor blocks.

Once a coding mode is selected for the current block BLK or coding modes for subblocks of the current block BLK are selected, the mode selection unit delivers a predicted block PRED and corresponding syntax elements to be coded in the bitstream for performing the same block prediction at a decoder. When the current block BLK has been split, the predicted block PRED is formed by the set of predicted subblocks delivered by the mode selection unit for each subblocks.

A residual block RES is then obtained by subtracting the predicted block PRED from the original block BLK.

The residual block RES is then transformed by a transform processing module delivering a transform block TCOEF of transformed coefficients. The transform block TCOEF is then quantized by a quantization module delivering a quantized transform block QCOEF of quantized residual transform coefficients.

The syntax elements and quantized residual transform coefficients of the block QCOEF are then input to an entropy coding module to deliver coded data to form the coded bitstream STR.

The quantized residual transform coefficients of the quantized transform block QCOEF are processed by an inverse quantization module delivering a block TCOEF' of unquantized transform coefficients. The block TCOEF' is passed to an inverse transform module for reconstructing a block of residual prediction RES'.

A reconstructed version REC of the block BLK is then obtained by adding the prediction block PRED to the reconstructed residual prediction block RES'.

The reconstructed block REC is stored in memory for use by a picture reconstruction module. The picture reconstruction module performs reconstruction of a decoded version I' of the picture I from the reconstructed blocks REC. The reconstructed picture I' is then stored in a reference picture memory for later use as a reference picture for encoding the following pictures of the set of pictures to code or for encoding subsequent blocks of the picture I.

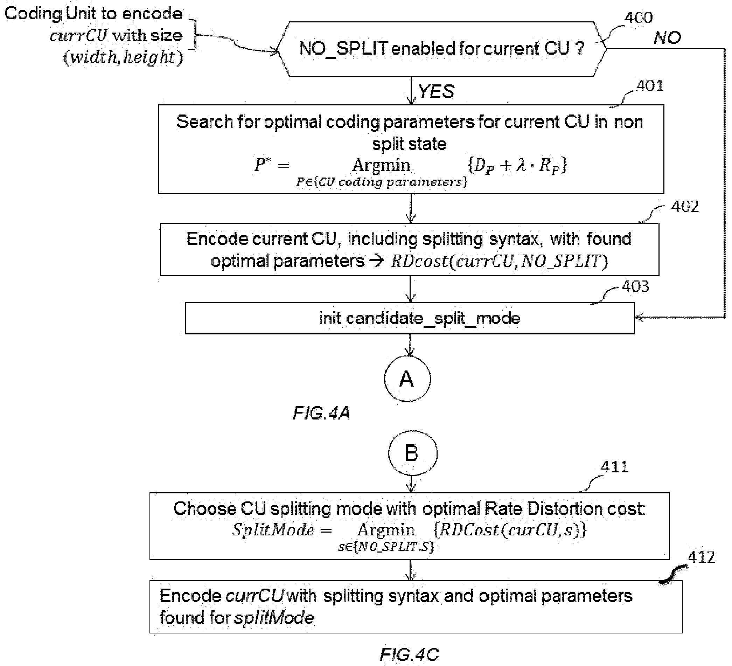

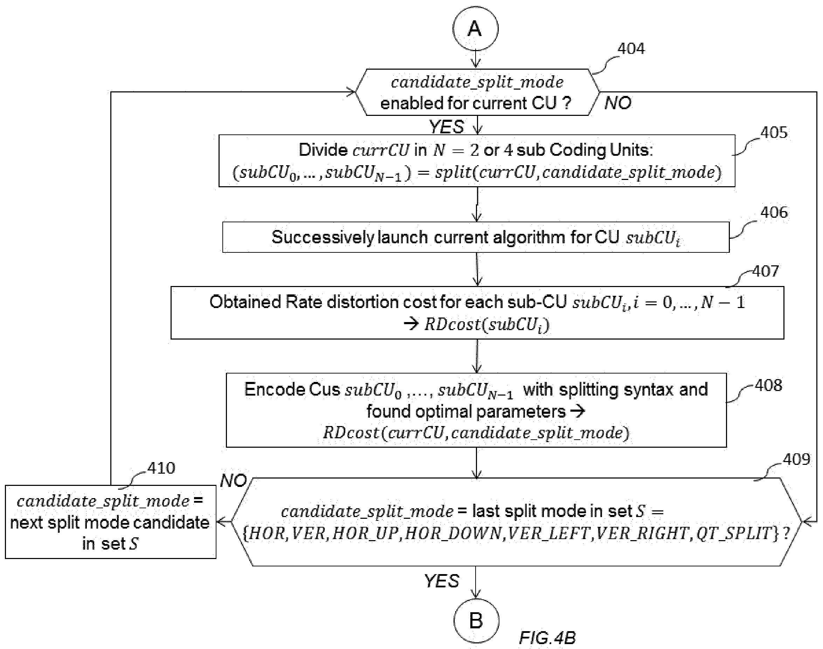

Figure 4 depicts a method for selecting an optimal splitting mode for a current CU used for coding the current CU according to an embodiment of the present disclosure. Such a method allows determining a splitting configuration for a current CU and each subsequent sub-CU when the current CU is split, thus providing a QTBT representation for the current CU.

The input to this method is an input coding unit *currCU* to encode, such a CU *currCU* having a size (*width, height*) along an horizontal and vertical direction respectively.

In step 400, it is first checked whether a *NO_SPLIT* splitting mode is allowed for the currCU. In case the *NO_SPLIT* splitting mode is allowed, the process passes to step 401, otherwise, the process passes to step 403.

In step 401, the *NO_SPLIT* splitting mode is evaluated as a candidate coding structure for the CU current *currCU.* The *NO_SPLIT* splitting mode means that the current CU is not divided into sub-CU, thus the prediction, transform, quantization and entropy coding steps are applied on the current block with size (*width, height).*

Therefore, in step 401, the best coding modes (prediction mode, intra prediction angle, intra smoothing mode, motion vector, transform index ...) is being searched for the current coding unit. The optimal CU coding parameters are noted $P^*$, and correspond to the set of coding parameters with minimal rate distortion cost $D + \lambda \cdot R,$ where $D$ is the distortion, R is the rate cost (number of bits to code current CU), and $\lambda$ is a Lagrangian parameter.

In step 402, a resulting rate distortion cost associated with current CU, in the *NO_SPLIT* splitting configuration, noted *RDcost*(*currCU, NO_SPLIT*) is computed by encoding the current CU with the optimal coding parameters $P^*$ and also by integrating the rate cost associated with the splitting syntax used to signal the *NO_SPLIT* configuration for the current CU.

A next stage of the method consists in successively evaluating all candidate splitting modes for the current CU. All binary and quaternary splitting modes correspond to the following set:

$$S = \{HOR, VER, HOR\_UP, HOR\_DOWN, VER\_LEFT, VER\_RIGHT, QT\_SPLIT\}$$

The spatial splitting of an exemplary square coding unit for each of these splitting modes is illustrated by figures 2A and 2B.

In step 403, a candidate splitting mode is selected from the set of splitting mode, for instance the first splitting mode in the list.

For each candidate splitting mode, the following steps are performed.

In step 404, it is determined if the current candidate splitting mode is allowed for the current CU. In a specific and non limiting embodiment, if the candidate splitting mode is a binary split mode already supported in QTBT (i.e. one of the binary splitting modes HOR or VER of figure 2A), this test consists in checking that the size (height and width) of current CU is higher than a minimum CU size, smaller than a maximum CU size and that the number of successive binary splittings (uiBTDepth) is lower than a maximum split depth (MaxBTD):

$$( \ (height > uiMinBTSize \ || \ width > uiMinBTSize)$$
$$\&\& \ width <= uiMaxBTSize \ \&\& \ height <= uiMaxBTSize \ \&\& \ uiBTDepth < uiMaxBTD)$$

where uiMinBTSize represents a minimal size allowed for a coding unit in the binary tree, uiMaxBTSize represents a maximal size allowed for a coding unit in the binary tree, uiBTDepth represents the depth (i.e. the number of successive binary splits) of the current CU in the binary tree whose configuration is being determined by the on-going process, uiMaxBTD represents the maximal allowed depth of a binary tree.

If the above condition is true, then the binary splitting modes HOR or VER are allowed.

If the current splitting mode is a quaternary split (QT_SPLIT mode on figure 2A), it is checked that the current CU is not issued from a binary split and that the size of the current CU is larger than a minimum CU size minQTSize. In this case, the QT_SPLIT mode is allowed.

If the candidate splitting mode is an asymmetric splitting mode, the following condition is tested for the horizontal asymmetric splitting modes according to an embodiment:

$$(height \ / \ 4) \ >= \ uiMinBTSize$$
$$\&\& \ width \ <= \ uiMaxBTSize \ \&\& \ height \ <= \ uiMaxBTSize \ \&\& \ uiBTDepth < uiMaxBTD$$
$$\&\& \ (height \ \% \ 3) \ ! = \ 0$$

If the condition is true, the horizontal asymmetric splitting modes (HOR_UP, HOR_DOWN) are allowed. Otherwise, the horizontal asymmetric splitting modes are not allowed.

A similar check is performed for the vertical asymmetric splitting modes (VER_RIGHT, VER_LEFT) by:

$$(width \, / \, 4) \, >= \, uiMinBTSize$$

$$\&\& \, height \, <= \, uiMaxBTSize \, \&\& \, width \, <= \, uiMaxBTSize \, \&\& \, uiBTDepth \, < \, uiMaxBTD$$

$$\&\& \, (width \, \% \, 3) \, ! = \, 0$$

If the condition is true, the vertical asymmetric splitting modes (HOR_UP, HOR_DOWN) are allowed. Otherwise, the vertical asymmetric splitting modes are not allowed. According to a variant, an asymmetric splitting mode is allowed only for coding a Luma component of the current CU and not for coding the Chroma component of the current CU. If the candidate splitting mode is not allowed, then the process directly goes to step 409. If the candidate splitting mode is allowed, then the process passes to step 405.

In step 405, the current CU is divided into 2 or 4 smaller sub-CUs, according to the current candidate splitting mode. If the splitting mode corresponds to a binary splitting configuration, then 2 sub-CUs are obtained, with respective size according to the block spatial division illustrated by figures 2A and 2B. In case the current candidate splitting mode is equal to QT_SPLIT, then 4 sub-CU with a same size (*width*/2, *height*/2) are obtained. In step 406, once the sub coding units are obtained, a loop over each obtained sub-CU is performed. For each obtained sub-CU, the current process of figure 4 is called in a recursive way. This results in obtaining a set of optimal coding parameters for each subCU. In step 407, minimum rate-distortion costs, noted $RDCost(subCU_i)$, $\forall i = 0,..., N$ - 1, are obtained for each subCU, according to the set of optimal coding parameters obtained for each obtained subCU.

In step 408, the current CU *currCU* is encoded by coding the sub coding units $subCU_i$, $i = 0, \ldots, N$ -1, together with the splitting syntax needed to indicate how the current CU is dividing into sub coding units, according to the current candidate splitting mode. A Rate Distortion cost associated with the current CU and the current candidate splitting mode, noted *RDcost(currCU, candidate_split_mode)*, is thus obtained.

In step 409, it is checked whether all available candidate splitting mode have been evaluated. If this is not the case, the process passes to step 410. Otherwise, the process passes to step 411.

In step 410, the next candidate splitting mode from the set S of candidate splitting modes is selected and the process is iterated from step 404 for such a next candidate splitting mode.

In step 411, all available candidate splitting mode have been evaluated. The candidate splitting mode *bestSplitMode* with the lowest RD cost is chosen among all candidate splitting modes that have been evaluated, i.e. for which a rate-distortion cost has been computed and stored.

In step 412, the current CU is encoded with the best splitting configuration *bestSplitMode.*

According to the decision process disclosed in figure 4, the RD optimization process evaluates, for a given CU, each candidate splitting mode for that CU, one after the other. More precisely, the order in which coding unit splitting modes are evaluated is the following:

1. NO_SPLIT
2. HOR
3. VER
4. HOR_UP
5. HOR_DOWN
6. VER_LEFT
7. VER_RIGHT
8. QT_SPLIT (quad-tree splitting)

Several embodiments are disclosed below to decrease the computational complexity on the encoder side. They may be used independently or in combination.

Therefore, before starting to evaluate the asymmetric splitting mode, the encoder knows the Rate Distortion cost associated with the splitting modes NO_SPLIT, symmetric horizontal splitting and symmetric vertical splitting.

According to an embodiment of the present disclosure, this knowledge is exploited for reducing computational complexity of the encoding process.

According to an embodiment of the present disclosure, if the horizontal symmetric splitting is not sufficiently competitive in terms of RDcost compared to the NO_SPLIT configuration, then the horizontal asymmetric splitting modes are disabled, i.e the horizontal asymmetric splitting modes are not evaluated.

According to another embodiment of the present disclosure, if the vertical symmetric splitting is not sufficiently competitive in terms of RDcost compared to the NO_SPLIT configuration, then the vertical asymmetric splitting modes are disabled, i.e the vertical asymmetric splitting modes are not evaluated.

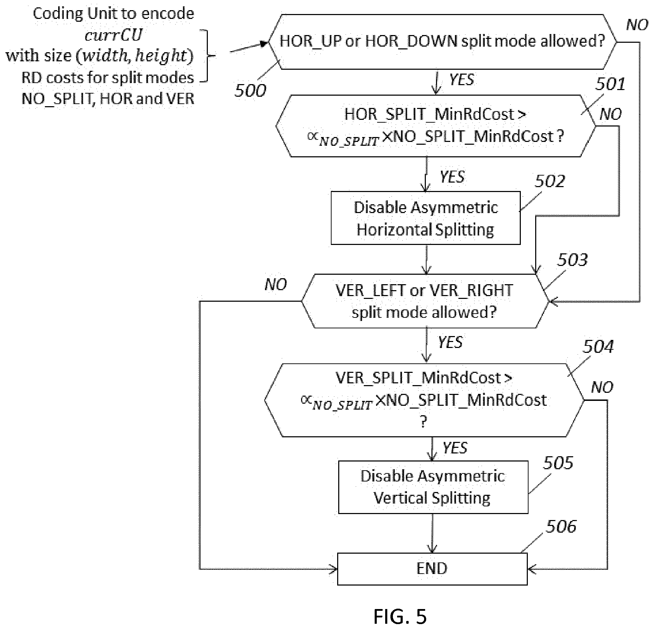

Such embodiments can be embedded in step 404 of the decision process disclosed in figure 4. Such embodiments are disclosed by figure 5, in a successive way. Step 404 from figure 4 thus comprises the following steps.

In step 500, it is checked whether horizontal asymmetric splitting modes are allowed (HOR_UP and HOR_DOWN) by checking the following condition is true:

$$(height \, / \, 4) \, >= \, uiMinBTSize$$

$$\&\& \, width \, <= \, uiMaxBTSize \, \&\& \, height \, <= \, uiMaxBTSize \, \&\& \, uiBTDepth < uiMaxBTD$$

$$\&\& \, (height \, \% \, 3) \, ! = \, 0$$

If the condition is not true, the process passes to step 503. Otherwise, the process passes to step 501.

Let HOR_SPLIT_minRdCost and NO_SPLIT_MinRdCost be the rate distortion costs respectively associated with the best coding of the current CU according respectively to the HOR mode and NO_SPLIT mode. Let $\propto_{NO\_SPLIT}$ be a factor, typically equal to 1.1.

In step 501, it is checked of the following relationship is true:

$$\text{HOR\_SPLIT\_MinRdCost} > \propto_{NO\_SPLIT} \times \text{NO\_SPLIT\_MinRdCost}$$

If such a relationship is true, in step 502, all horizontal asymmetric splitting modes are disabled for the current CU.

In step 503, it is checked whether vertical asymmetric splitting modes are allowed (VER_LEFT and VER_RIGHT) by checking if the following condition is true:

$$(width \, / \, 4) \, >= \, uiMinBTSize$$

$$\&\& \, height <= \, uiMaxBTSize \, \&\& \, width \, <= \, uiMaxBTSize \, \&\& \, uiB\square Depth < uiMaxBTD$$

$$\&\& \, (width \, \% \, 3) \, ! = \, 0$$

If the condition is not true, the process passes to step 506 and ends. Otherwise, the process passes to step 504.

Let VER_SPLIT_minRdCost be the rate distortion costs respectively associated with the best coding of the current CU according to the VER splitting mode.

In step 504, it is checked if the following relationship is true:

$$\text{VER\_SPLIT\_MinRdCost} > \propto_{NO\_SPLIT} \times \text{NO\_SPLIT\_MinRdCost}$$

If such a relationship is true, in step 505, all vertical asymmetric splitting modes are disabled for the current CU.

According to this embodiment, when an asymmetric splitting mode is selected at step 403 or step 410 as a candidate splitting mode, if the asymmetric splitting mode is disabled as the result of step 404 using the process disclosed with figure 5, then the process of figure 4 passes to step 409. If the asymmetric splitting mode is enabled, the process of figure 4 passes through the steps 405-408 for determining a rate-distortion cost for the candidate splitting mode.

According to another embodiment, if the symmetric horizontal and vertical splitting modes have been both evaluated, and if one of them performs significantly better than the other one, then asymmetric splitting modes are allowed only for the orientation (horizontal or vertical) associated with the symmetric splitting mode that performs significantly better. Such an embodiment can be used independently from the embodiments disclosed above or in combination with them.

If, both vertical and horizontal asymmetric splitting modes are enabled, the minimum RD cost respectively associated with the symmetric horizontal splitting mode and to the symmetric vertical splitting mode are compared. If the following relation is true:

$$\text{HOR\_SPLIT\_MinRdCost} > \propto_{HOR\_VER\_SPLIT} \times \text{VER\_SPLIT\_MinRdCost},$$

then the asymmetric horizontal splitting mode is likely to perform worse than the vertical asymmetric splitting mode. In that case, the horizontal asymmetric splitting mode is disabled, i.e. the horizontal asymmetric splitting mode is not evaluated. Here $\propto_{HOR\_VER\_SPLIT}$ is another multiplicative constant factor, typically equal to 1.1.

Reciprocally, if the symmetric vertical and horizontal minimun RD costs are such that:

$$VER\_SPLIT\_MinRdCost > \propto_{HOR\_VER\_SPLIT} \times HOR\_SPLIT\_MinRdCost,$$

then the vertical asymmetric splitting mode is disabled, i.e. the vertical asymmetric splitting mode is not evaluated.

According to another embodiment, the principle disclosed herein proposes to skip, i.e. to disable the asymmetric splitting modes of a coding unit, when the NO_SPLIT mode performs sufficiently well for encoding the current CU.

According to this embodiment, in step 404 of figure 4, it is checked if the residual block delivered by the quantization module (for instance after transforming and quantizing the residual block RES on figure 3) has all its quantized transform coefficients equal to zero when the current CU is encoded in the NO_SPLIT mode. In that case, the asymmetric splitting modes are disabled and are not allowed as candidate splitting modes for the current CU.

According to a first variant, this embodiment is used only for coding the Luma component of the current CU.

According to another variant, this embodiment is used both for coding the Luma and Chroma components of the current CU.

Checking that the current CU encoded in the NO_SPLIT splitting mode with parameters P* has all its quantized coefficients equal to zero can be performed in a simple manner by checking the value of a syntax element CBF (Coded Bit Flag) flag associated with the current CU, in the considered component. Indeed, CBF indicates whether at least one transform coefficient for the component of the current CU is non-zero.

According to another embodiment, the present principle proposes to compare the RD cost associated with already evaluated splitting modes, with a partial RD cost of an asymmetric splitting mode being currently evaluated.

According to this embodiment, in the case of HOR_DOWN and VER_RIGHT asymmetric splitting modes, the first subCU of the current CU spatially covers a large part of the embedding parent CU. Thus, if the asymmetric CU splitting mode is not efficient, such a splitting mode may lead to a RD cost associated with this first subCU that is higher than the RD cost of one of the RD costs of already evaluated splitting modes for the current embedding parent CU. If this is the case, then the asymmetric splitting mode under consideration is stopped.

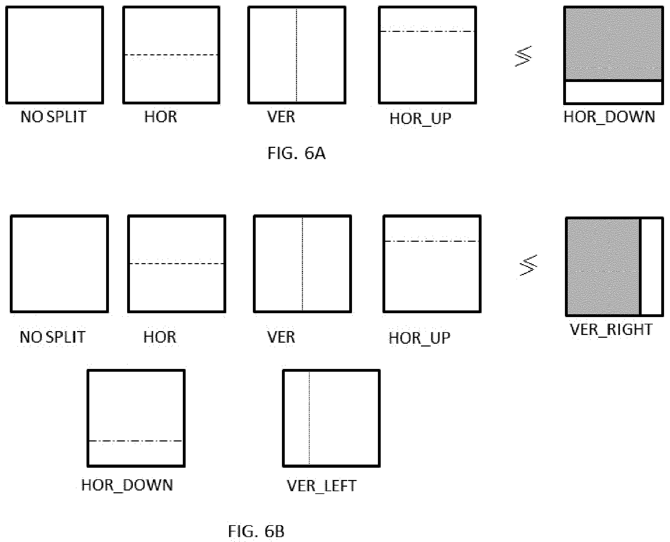

Such an embodiment is illustrated on figure 6A for the asymmetric splitting mode HOR_DOWN and on figure 6B for the asymmetric splitting mode VER_RIGHT.

This embodiment is embedded in the decision process disclosed in figure 4 as follows.

In step 407, once the rate-distortion cost is obtained for the first subCU of the asymmetric splitting mode under consideration, such rate-distortion cost is compared to the rate-distortion costs obtained with previously evaluated splitting modes. By taking into account the order in which the splitting modes for a current CU are evaluated:

- the previously evaluated splitting modes are shown on the left side of figure 6A for the asymmetric splitting mode HOR_DOWN, and
- the previously evaluated splitting modes are shown on the left side of figure 6B for the asymmetric splitting mode VER_RIGHT.

If the rate-distortion cost associated with the first subCU is higher than at least one of the RD costs of already evaluated splitting modes, then the evaluation of the second subCU obtained from the asymmetric splitting mode under consideration is disabled. Therefore, in the loop on the subCU$_i$, in step 406, the decision process is not launched for the second subCU, and the rate-distortion cost for the considered asymmetric splitting mode is set to an infinite value or at least a very high value so that this asymmetric splitting mode is discarded at step 411.

According to another embodiment of the present principle, the evaluation of an asymmetric splitting mode for the current CU may be enabled or disabled depending on a comparison of splitting lines resulting from the splitting of the current CU with the asymmetric splitting mode and from the splitting of the current CU with previously evaluated splitting modes.

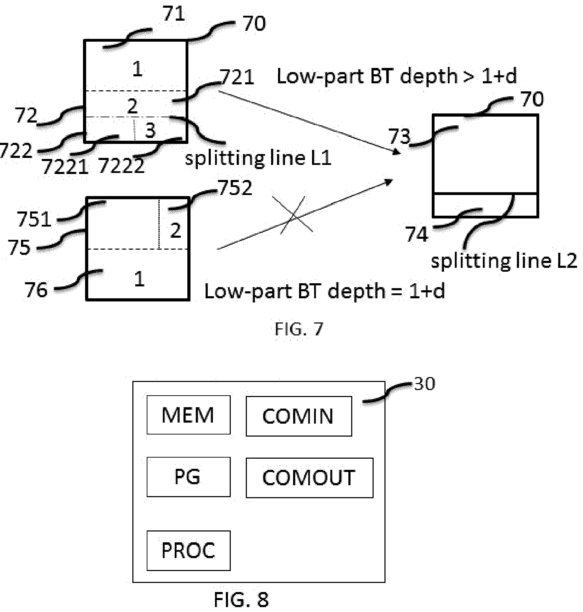

An example of such enabling and disabling of asymmetric horizontal down splitting is illustrated on figure 7. On figure 7, the top-left situation illustrates the results of the decision process performed on a current CU (70, at depth 0 of the binary tree) for the horizontal symmetric splitting mode. The binary tree decision process performed recursively on the sub CU of the current CU (70) for a symmetric horizontal splitting of the current CU leads to two subCUs (71 and 72 at depth 1 on figure 7), with the lower subCU (72) being further split horizontally into subCUs 721 and 722 (with binary tree depth equals to 2) and with the lower subCU 722 of the subCU 72 being further split vertically into the subCUs 7221 and 7222 with binary tree depth equal to 3. According to the present embodiment, when evaluating the horizontal asymmetric splitting mode HOR_DOWN for the current CU (right side of figure 7 illustrating the current CU 70 asymmetrically split into sub CUs 73 and 74 with binary tree depth equals 1), the asymmetric splitting mode is allowed because the horizontal symmetric splitting mode of the current CU has led to a topology close to the topology of the HOR_DOWN splitting mode of the current CU. That is, there is a subCU (722) of the horizontal symmetric splitting mode of the current CU that corresponds to a subCU (74) of the horizontal asymmetric splitting mode. The splitting line L1 is co-located with the splitting line L2. In this case, the subCU 72 is said to be co-located with the splitting line L2 because it contains the splitting line L2.

On the contrary, the bottom-left of figure 7 illustrates another result of the decision process performed on the current CU 70 for the horizontal symmetric splitting mode. The binary tree decision process performed recursively on the sub CUs of the current CU (70) for a symmetric horizontal splitting of the current CU leads to two subCUs (75 and 76 at depth 1 on figure 7), with the higher subCU (75) being further split vertically into subCUs 751 and 752 (with binary tree depth equals to 2). Here, the lower subCU (76) is not further split (i.e. its BT Depth is not increased). Thus the HOR_DOWN splitting mode is disabled for the current CU as the horizontal symmetric splitting mode does not lead to a topology close to the topology of the HOR_DOWN splitting mode of the current CU. Indeed, there is no splitting line in subCU 76 that is co-located with the splitting line L2 in current CU.

Such an embodiment can be implemented in the binary tree decision process disclosed in figure 4 by evaluating the Binary Tree depth (called BT depth for short) of the coding unit resulting from the evaluation of the symmetric splitting mode with the same orientation than the orientation of the asymmetric binary splitting mode currently being considered as a candidate splitting mode.

More precisely, the BT depth of the subCU (72 or 76 in the examples of figure 7) which is obtained from a symmetric splitting mode and which contains the splitting line L2 of the asymmetric splitting mode is considered. If this BT depth is higher than the BT depth d of current parent CU (70) plus 1, then the considered asymmetric splitting mode is going to be evaluated. Otherwise, the evaluation of the considered asymmetric splitting mode is disabled. In the case of figure 7, the top left example shows a case where the chosen CU representation after symmetric horizontal splitting leads to a BT depth higher than the current BTdepth+1 for the lower part of the parent CU. In that case, according to this embodiment, evaluating the HOR_DOWN asymmetric splitting mode is enabled.

On the contrary, if the RD search for the symmetric horizontal splitting mode of the current CU leads to the splitting configuration shown on the bottom left of figure 7, then the BT depth of the lower part of the CU is equal to current BTdepth+1. In that case, according to the present embodiment, the evaluation of the HOR_DOWN splitting mode for the current parent CU is disabled.

Step 404 from figure 4 further comprises the following operations.

If the horizontal asymmetric splitting is allowed (i.e. checks on width and height of the current CU disclosed above),

> o Let BT_depth_HOR_0 be the BT depth of the top sub-CU selected by the RD search already performed for HOR split mode,
> o Let BT_depth_HOR_1 be the BT depth of bottom sub-CU selected by the RD search already performed for HOR split mode,
> o If BT_depth_HOR_0 is less or equal to current BTdepth+1, then disable HOR_UP split mode RD search,
> o If BT_depth_HOR_1 is less or equal to current BTdepth+1, then disable HOR_DOWN split mode RD search.

If the vertical asymmetric splitting mode is allowed (i.e. checks on width and height of the current CU disclosed above),

> o Let BT_depth_VER_0 be the BT depth of left sub-CU chosen by the RD search already performed for VER split mode,
> o Let BT_depth_VER_1 be the BT depth of right sub-CU chosen by the RD search already performed for VER split mode,
> o If BT_depth_VER_0 is less or equal to current BTdepth +, then disable VER_LEFT split mode RD search,
> o If BT_depth_VER_1 is less or equal to current BTdepth+1, then disable VER_RIGHT split mode RD search.

According to another variant of the present embodiment, disabling an asymmetric BT splitting mode also depends on the BT depth of the symmetric sub-CU corresponding to the larger sub-CU of a candidate asymmetric splitting mode to be evaluated. Basically, the symmetric sub-CU corresponding to the larger asymmetric sub-CU should not have been split further in a symmetric way, in order to allow RD search for the considered asymmetric splitting mode. According to this variant, step 404 from figure 4 further comprises the following operations. If horizontal asymmetric splitting is allowed:

o Let BT_depth_HOR_0 be the BT depth of top sub-CU chosen by the RD search already performed for HOR split mode,
o Let BT_depth_HOR_1 be the BT depth of bottom sub-CU chosen by the RD search already performed for HOR split mode,
o If BT_depth_HOR_0 $\leq$ current BTdepth+1 or BT_depth_HOR_1 > current BTdepth+1 then disable HOR_UP split mode RD search,
o If BT_depth_HOR_1 $\leq$ current BTdepth+1 or BT_depth_HOR_0 > current BTdepth+1 then disable HOR_DOWN split mode RD search.

If vertical asymmetric splitting mode is allowed:

o Let BT_depth_VER_0 be the BT depth of left sub-CU chosen by the RD search already performed for VER split mode,
o Let BT_depth_VER_1 be the BT depth of right sub-CU chosen by the RD search already performed for VER split mode,
o If BT_depth_VER_0 $\leq$ current BTdepth+1 or BT_depth_VER_1> current BTdepth+1 , then disable VER_LEFT split mode RD search,
o If BT_depth_VER_1$\leq$ current BTdepth+1 or BT_depth_VER_0> current BTdepth+1, then disable VER_RIGHT split mode RD search.

According to another variant of the present embodiment, disabling an asymmetric BT splitting mode depends on the BT depth and splitting mode of the symmetric sub-CU corresponding to the position of the candidate asymmetric binary mode to be evaluated. Basically, the symmetric sub-CU corresponding to the position of the asymmetric splitting should have at least one BT Splitting Mode of a same orientation as candidate asymmetric splitting mode for a depth greater than BTdepth+1.
According to this variant, step 404 from figure 4 further comprises the following operations.
If horizontal asymmetric splitting mode is allowed:

o Disable all horizontal asymmetric split mode RD search,
o For depth = BTdepth+1 to the maximum Depth allowed for a binary tree, the following loop applies:

▪ Let BT_mode_HOR_0 be the binary tree mode (BTMode) for depth of the top sub-CU chosen by the RD search already performed for HOR split mode,
▪ Let BT_mode_HOR_1 be the BTMode for depth of the bottom sub-CU chosen by the RD search already performed for HOR split mode,
▪ If BT_mode_HOR_0 == HOR then enable HOR_UP split mode RD search,
▪ If BT_mode_HOR_1 == HOR then enable HOR_DOWN split mode RD search.

If vertical asymmetric splitting mode is allowed:

o Disable all vertical asymmetric split mode RD search,
o For depth = BTdepth+1 to the maximum Depth allowed for a binary tree, the following loop applies:

▪ Let BT_mode_VER_0 be the BTMode for depth of left sub-CU chosen by the RD search already performed for VER split mode,
▪ Let BT_mode_VER_1 be the BTMode for depth of right sub-CU chosen by the RD search already performed for VER split mode,
▪ If BT_mode_VER_0 == VER then enable VER_LEFT split mode RD search,
▪ If BT_mode_VER_1 == VER then enable VER_RIGHT split mode RD search.

According to another embodiment of the present disclosure, to speed-up the encoder side rate distortion optimization process, some tools are disabled when asymmetric coding units are used.
As an example, the RSAF (Reference Sample Adaptive Filtering) tool is switch off for the coding units that have a size multiple of 3. The RSAF tool aims at filtering the reference samples of the causal spatial area used to intra predict a current CU. A loop between at least 2 RSAF modes (on and off) shall be performed, and the RD optimization of the coding units is performed for these at least two modes.
According to the present embodiment, the RSAF tool is systematically disabled for the CU of size $3 \cdot 2^n$. Thus, the coding process is faster, and the loss in compression efficiency is limited.

According to a variant of this embodiment, other tools that imply a large amount of time spend in the RDO process can be disabled. For example, the PDPC (Position Dependent Predictor Combination) consists in performing intra prediction that is adaptive to each predicted sample position. As for RSAF, the RDO process for PDPC implies a loop that iterates on several PDPC modes to predict a current intra CU. In this variant, only a subset of PDPC modes are used for CUs with a size multiple of 3. According to another variant, the PDPC tool is fully de-activated for CUs with a size multiple of 3.

Figure 8 illustrates the simplified structure of an apparatus (30) for encoding a picture according to an embodiment of the present principle. Such an apparatus 30 is configured to implement the method for encoding a video according to the present principle according to any embodiments disclosed above. The functional units of the encoder apparatus 30 have been disclosed in reference to figure 3. The structural apparatus 30 disclosed below may be configured to implement each of these functional units individually or in combination, and according to any one of the embodiments of the principle disclosed above.

According to an embodiment, the encoder apparatus 30 comprises a processing unit PROC equipped for example with a processor and driven by a computer program PG stored in a memory MEM and implementing the method for encoding a video according to the present principle.

At initialization, the code instructions of the computer program PG are for example loaded into a RAM (not shown) and then executed by the processor of the processing unit PROC. The processor of the processing unit PROC implements the steps of the method for encoding a video which has been described here above, according to the instructions of the computer program PG.

The encoder apparatus 30 comprises a communication unit COMOUT to transmit an encoded bitstream STR to a data network.

The encoder apparatus 30 also comprises an interface COMIN for receiving a picture or a video to encode.

**Claims**

1. A method for encoding a video comprising, for at least one block from a picture of said video:

   - determining (402, 408) at least one first rate-distortion cost for coding said block according to a first splitting mode of said block,
   - determining (404) if coding said block according to said first splitting mode of said block satisfies a criterion,
   - if said criterion is satisfied, determining (408) a second rate-distortion cost for coding said block according to at least one asymmetric splitting mode, wherein said asymmetric splitting mode corresponds to splitting said block horizontally, or vertically, into two asymmetric subblocks,
   - determining (411) a best splitting mode for said block according to at least said first rate-distortion cost and said second rate-distortion cost,
   - encoding (412) said block according to said best splitting mode.

2. The method according to claim 1, wherein said first splitting mode belongs to a group comprising at least:

   - a no-splitting mode wherein said block is not split,
   - a horizontal splitting mode wherein said block is split horizontally into two symmetric subblocks,
   - a vertical splitting mode wherein said block is split vertically into two symmetric subblocks.

3. The method according to any one of claims 1 to 2, wherein said first splitting mode is a mode wherein said block is not split, and said method further comprising:

   - determining a third coding cost for coding said block according to a symmetric splitting mode of said block, wherein said symmetric splitting mode corresponds to splitting said block horizontally, or vertically, into two symmetric subblocks,
   - and wherein said criterion is satisfied if said third coding cost over said first coding cost is lower than a predetermined threshold, said asymmetric splitting mode being a splitting mode according to a same orientation as said symmetric splitting mode.

4. The method according to any one of claims 1 to 2, wherein said first splitting mode is a horizontal symmetric splitting mode wherein said block is split horizontally into two symmetric subblocks, and said method further comprising:

   - determining a third coding cost for coding said block according to a vertical symmetric splitting mode, wherein said vertical symmetric splitting mode corresponds to splitting said block vertically into two symmetric subblocks,
- wherein said criterion is satisfied if said first coding cost over said third coding cost is higher than a first threshold,
- and wherein if said criterion is satisfied, said asymmetric splitting mode is a vertical asymmetric splitting mode,
- otherwise, if said third coding cost over said first coding cost is higher than a second threshold, said asymmetric splitting mode is a horizontal asymmetric splitting mode.

5. The method according to any one of claims 1 to 2, wherein said first splitting mode is a mode wherein said block is not split, and wherein said criterion is satisfied if quantized transform coefficients obtained from said block when coding said block according to said first splitting mode are not all zero.

6. The method according to any one of claims 1 to 2, wherein:

- said first splitting mode is a horizontal, or respectively vertical, splitting mode,
- wherein a subblock is obtained by splitting said block according to said first splitting mode, said subblock being co-located with a splitting line of said block when said block is split according to said asymmetric splitting mode, said asymmetric splitting mode and said first splitting mode being along a same orientation, said criterion is satisfied if a binary tree depth associated with said subblock is higher than a binary tree depth associated with said block plus 1.

7. The method according to any one of claims 1 to 6, wherein when said criterion is satisfied, said block being asymmetrically split horizontally or vertically into a first sub-block and a second sub-block, said first sub-block being larger than said second sub-block, said method further comprises:

- comparing a rate-distortion cost computed for said first sub-block with a rate-distortion cost computed for a spatially corresponding sub-block obtained from a splitting mode of said block previously evaluated,
- if said rate-distortion cost computed for said first sub-block is lower or equal than said rate-distortion cost computed for said spatially corresponding sub-block, determining a rate-distortion cost for said second sub-block.

8. The method according to any one of claims 1 to 7, wherein when said criterion is satisfied, said block being asymmetrically split horizontally or vertically into a first sub-block and a second sub-block, said first sub-block or said second sub-block having a size equals to $3 \times 2^n$, n being an integer with $n \geq 0$, and wherein said method further comprises determining a best coding mode for coding at least said first sub-block, wherein at least one encoding tool to be applied to said first sub-block is disabled or adapted.

9. The method according to claim 8, wherein said at least one encoding tool belongs to a list comprising:

- a reference sample adaptive filtering used for filtering causal spatial neighbor samples used for performing intra prediction of said first sub-block,
- a position dependent predictor combination used for adapting intra prediction according to a position of a predicted sample from said first sub-block.

10. An apparatus for encoding a video comprising, for at least one block from a picture of said video:

- means for determining at least one first coding cost for coding said block according to at least one predetermined splitting mode of said block,
- means for determining if coding said block according to said predetermined splitting mode of said block satisfies a predetermined criterion,
- means for, if said predetermined criterion is satisfied, determining a second coding cost for coding said block according to a horizontal or vertical asymmetric splitting mode, wherein said horizontal, respectively vertical asymmetric splitting mode corresponds to splitting said block horizontally, respectively vertically, at a non-zero distance from a horizontal middle line, respectively a vertical middle line, of said block,
- means for determining a best splitting mode for said block according to at least said first coding cost and said second coding cost,
- means for encoding said block according to said best splitting mode.

11. A computer program comprising software code instructions for performing the method according to any one of claims 1 to 9, when the computer program is executed by a processor.

Fig.1A

Fig.1B

NO_SPLIT QT_SPLIT HOR VER

Fig.2A

HOR_UP HOR_DOWN VER_LEFT VER_RIGHT

Fig.2B

EP 3 306 929 A1

15

Fig.3

**FIG.4A**

Coding Unit to encode *currCU* with size (*width,height*)

400 — NO_SPLIT enabled for current CU ? → NO

YES

401 — Search for optimal coding parameters for current CU in non split state

$$P^* = \underset{P \in \{CU\ coding\ parameters\}}{Argmin} \{D_P + \lambda \cdot R_P\}$$

402 — Encode current CU, including splitting syntax, with found optimal parameters → $RDcost(currCU, NO\_SPLIT)$

403 — init candidate_split_mode

A

**FIG.4C**

B

411 — Choose CU splitting mode with optimal Rate Distortion cost:

$$SplitMode = \underset{s \in \{NO\_SPLIT, S\}}{Argmin} \{RDCost(currCU, s)\}$$

412 — Encode *currCU* with splitting syntax and optimal parameters found for *splitMode*

**A**

$candidate\_split\_mode$ enabled for current CU ?  /NO — 404

YES ↓

Divide $currCU$ in $N = 2$ or 4 sub Coding Units: $(subCU_0, \dots, subCU_{N-1}) = split(currCU, candidate\_split\_mode)$ — 405

Successively launch current algorithm for CU $subCU_i$ — 406

Obtained Rate distortion cost for each sub-CU $subCU_i, i = 0, \dots, N-1$ $\rightarrow RDcost(subCU_i)$ — 407

Encode Cus $subCU_0, \dots, subCU_{N-1}$ with splitting syntax and found optimal parameters $\rightarrow$ $RDcost(currCU, candidate\_split\_mode)$ — 408

410 — $candidate\_split\_mode =$ next split mode candidate in set $S$

NO / $candidate\_split\_mode =$ last split mode in set $S =$ $\{HOR, VER, HOR\_UP, HOR\_DOWN, VER\_LEFT, VER\_RIGHT, QT\_SPLIT\}$ ? — 409

YES ↓

**B**

*FIG.4B*

Coding Unit to encode
*currCU*
with size (*width, height*)
RD costs for split modes
NO_SPLIT, HOR and VER

HOR_UP or HOR_DOWN split mode allowed? — **NO**

*500*

**YES**

*501*

HOR_SPLIT_MinRdCost >
$\propto_{NO\_SPLIT}$ ×NO_SPLIT_MinRdCost ? — **NO**

**YES**

*502*

Disable Asymmetric
Horizontal Splitting

*503*

**NO** — VER_LEFT or VER_RIGHT
split mode allowed?

**YES**

*504*

VER_SPLIT_MinRdCost >
$\propto_{NO\_SPLIT}$ ×NO_SPLIT_MinRdCost
? — **NO**

**YES**

*505*

Disable Asymmetric
Vertical Splitting

*506*

END

FIG. 5

FIG. 6A

NO SPLIT HOR VER HOR_UP HOR_DOWN

FIG. 6B

NO SPLIT HOR VER HOR_UP VER_RIGHT

VER_LEFT HOR_DOWN

71 70
1
721 Low-part BT depth > 1+d
72 2
3 70
722 73
7221 7222 splitting line L1

752
751 2
75
74
76 1 splitting line L2
Low-part BT depth = 1+d

FIG. 7

| MEM | COMIN |
| PG | COMOUT |
| PROC | |

30

FIG. 8

Europäisches
Patentamt

European
Patent Office

Office européen
des brevets

# EUROPEAN SEARCH REPORT

**Application Number**

EP 16 30 6324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | I-K KIM ET AL: "CE2: Test result of asymmetric motion partition (AMP)", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F379, 2 July 2011 (2011-07-02), XP030009402, * page 1 - page 2 * | 1-5,8-11 | INV. H04N19/176 H04N19/119 H04N19/147 H04N19/567 H04N19/557 |
| A | PHILIPP HELLE ET AL: "Block Merging for Quadtree-Based Partitioning in HEVC", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1720-1731, XP011487155, ISSN: 1051-8215, DOI: 10.1109/TCSVT.2012.2223051 * paragraph [000I] - paragraph [0III] * | 1-5,8-11 | |
| A | SU-WEI TENG ET AL: "Fast mode decision algorithm for Residual Quadtree coding in HEVC", VISUAL COMMUNICATIONS AND IMAGE PROCESSING (VCIP), 2011 IEEE, IEEE, 6 November 2011 (2011-11-06), pages 1-4, XP032081433, DOI: 10.1109/VCIP.2011.6116062 ISBN: 978-1-4577-1321-7 * paragraph [00IV] - paragraph [00IV] * | 5 | |

TECHNICAL FIELDS
SEARCHED (IPC)

H04N

~~The present search report has been drawn up for all claims~~

| Place of search | Date of completion of the search | Examiner |
|---|---|---|
| Munich | 3 February 2017 | Cordara, Giovanni |

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 8-11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 16 30 6324

The Search Division considers that the present European patent application does not comply with the requirements of unity of invention and relates to several inventions or groups of inventions, namely:

1. claims: 1-5, 8-11

   Video encoder optimization - asymmetric motion partitioning is enabled based on the rate-distortion costs of already evaluated splitting modes.
   ---

2. claim: 6

   Video encoder optimization - asymmetric motion partitioning is enabled when another block partition computed while traversing the quad-tree presents similar topology.
   ---

3. claim: 7

   Video encoder optimization - motion estimation on asymmetric motion partitions is completed when the rate-distortion cost of one asymmetric sub-block is lower than the cost of one co-located symmetric sub-block.
   ---

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithm Description of Joint Exploration Test Model 3. *Document JVET-C1001_v3, Joint Video Exploration Team of ISO/IEG JTC1/SC29/WG11,* 26 May 2015